# EUROPÄISCHE PATENTANMELDUNG

(11) **EP 3 531 300 A1**
(43) Veröffentlichungstag der Anmeldung: **28.08.2019**
(21) Anmeldenummer: 19158637.9
(22) Anmeldetag: 21.02.2019
(51) Int. Cl.: G06F 16/33

(54) **COMPUTERIMPLEMENTIERTES VERFAHREN ZUM BESCHAFFEN VON INFORMATIONEN**

(30) Priorität: 27.02.2018 DE 102018104438
(71) Anmelder: DTMS GmbH, 55118 Mainz (DE)
(72) Erfinder: Solak, Imdat, 81539 München (DE)
(74) Vertreter: Rothkopf, Ferdinand

(57) **Zusammenfassung**

Die Erfindung betrifft ein computerimplementiertes Verfahren zum Beschaffen von Informationen mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Erweitern des Anfrage-Datensatzes um mindestens einen Komplementär-Datensatz erfolgt.

## Beschreibung

### Gebiet der Erfindung

Die Erfindung betrifft ein computerimplementiertes Verfahren zum Beschaffen von Informationen mittels Eingeben eines Anfrage-Datensatzes, Ermitteln eines Antwort-Datensatzes zu dem Anfrage-Datensatz und Ausgeben des Antwort-Datensatzes.

### Hintergrund der Erfindung

Computerimplementierte Verfahren laufen auf einem Computer ab und werden von einem Computerprogramm gesteuert. Computerprogramme gehören zur Software eines Computers und bearbeiten bestimmte Aufgaben oder lösen Probleme mithilfe des Computers. Eine zu bearbeitende Aufgabe stellt das Beschaffen von Informationen dar, auch bezeichnet als Information Retrieval oder Informationsrückgewinnung. Dabei sollen vorhandene Informationen in einer Informationsquelle gefunden werden. Für eine Anfrage bzw. den Anfrage-Datensatz ermittelt das Computerprogramm einen Antwort-Datensatz, der eine angefragte Information enthält. Mit einem Datensatz ist hier also eine Gruppe von Daten gemeint, die mindestens eine Information beinhaltet. Nachdem der Antwort-Datensatzes ermittelt wurde, wird dieser, beispielsweise auf einem Display, ausgegeben bzw. angezeigt.

Das Ermitteln des Antwort-Datensatzes nimmt teilweise sehr viel Zeit in Anspruch. Zudem kann eine angefragte Information manchmal nicht beschafft werden, obwohl diese in einer verwendeten Informationsquelle zur Verfügung steht.

Der Erfindung liegt daher die Aufgabe zugrunde, ein Verfahren zum schnellen und effektiven Beschaffen von Informationen bereitzustellen.

### Zusammenfassung der Erfindung

Gemäß der Erfindung ist ein computerimplementiertes Verfahren zum Beschaffen von Informationen mittels Eingeben eines Anfrage-Datensatzes, Ermitteln eines Antwort-Datensatzes zu dem Anfrage-Datensatz und Ausgeben des Antwort-Datensatzes zur Verfügung gestellt, wobei bei dem Ermitteln des Antwort-Datensatzes ein Erweitern des Anfrage-Datensatzes um mindestens einen Komplementär-Datensatz erfolgt. Bei dieser erfindungsgemäßen Lösung wird also eine Frage bzw. der Anfrage-Datensatz um mindestens eine zusätzliche Information ergänzt. Diese mindestens eine zusätzliche Information ist in dem mindestens einen Komplementär-Datensatz enthalten. Mit dem Begriff "komplementär" ist hier "ergänzend" bzw. "vervollständigend" gemeint. Das Erweitern des Anfrage-Datensatzes erfolgt vorzugsweise durch Anreichern, Konzeptionieren oder Erklären, bevorzugt mit zusätzlichen Worten und/oder numerischen Angaben, wie Zeiten und Mengen. Dadurch wird eine zu durchsuchende Datenmenge eingegrenzt und der ursprüngliche Anfrage-Datensatz qualitativ verbessert. Folglich wird der Antwort-Datensatz schneller und passgenauer ermittelt.

Das Eingeben des Anfrage-Datensatzes und das Ausgeben des Antwort-Datensatzes erfolgen vorzugsweise mithilfe einer Nutzerschnittstelle mit einer Eingabe-Einrichtung und einer Ausgabe-Einrichtung. Die Eingabe-Einrichtung ist vorzugsweise eine Tastatur und die Ausgabe-Einrichtung bevorzugt ein Bildschirm. Mittels der Tastatur gibt ein Nutzer den Anfrage-Datensatz ein. Nach dem Ermitteln des Antwort-Datensatzes wird dieser auf dem Bildschirm ausgeben. Jeder Datensatz ist dabei vorzugsweise eine Gruppe von inhaltlich zusammenhängenden Datenfeldern. So umfasst ein Anfrage-Datensatz beispielsweise einen Nutzernamen als ein erstes Datenfeld und eine Nutzeranfrage als ein zweites Datenfeld.

Bei einer vorteilhaften Weiterbildung des erfindungsgemäßen computerimplementierten Verfahrens wird bei dem Ermitteln des Antwort-Datensatzes ein Rückfrage-Datensatz ausgegeben. Der Rückfrage-Datensatz beinhaltet eine Rückfrage bzw. eine Gegenfrage zu dem Anfrage-Datensatz, vorzugsweise mit einer Auswahl an Antworten für diese Rückfrage, auch als Multiple Choice bezeichnet. Die Rückfrage zeigt dem Nutzer an, warum der Antwort-Datensatz nicht ermittelt wurde und/oder welche zusätzlichen Informationen für die Ermittlung des Antwort-Datensatzes notwendig sind.

Bei dem Ermitteln des Antwort-Datensatzes wird bevorzugt der mindestens eine Komplementär-Datensatz eingegeben. Das heißt, mithilfe einer Eingabe wird mindestens eine zusätzliche Information zur Verfügung gestellt, um die Anfrage bzw. den Anfrage-Datensatz zu ergänzen. Dabei hat der Nutzer vorzugsweise Wissen zum Kontext oder zum Zweck der Anfrage und ist bevorzugt derselbe Nutzer, der bereits den Anfrage-Datensatz eingegeben hat. Das Eingeben des Komplementär-Datensatzes, vorzugsweise mittels einer Nutzerschnittstelle mit Tastatur, ist ein sehr geeigneter Weg zur Spezifizierung des Anfrage-Datensatzes. Der Antwort-Datensatz wird somit effektiver ermittelt und der ermittelte Antwort-Datensatz passt genauer zu dem Anfrage-Datensatz.

In einer vorteilhaften Ausführungsform wird bei dem Ermitteln des Antwort-Datensatzes der mindestens eine Komplementär-Datensatz unter Berücksichtigung einer situativen Kontextinformation erzeugt. Die zu ergänzende Information bezieht sich also auf eine Situation, in welcher die Anfrage gestellt wird. Eine solche Situation ist zum Beispiel eine Anfrage des Nutzers zu einer Urlaubsregelung eines Unternehmens, in dem der Nutzer beschäftigt ist. Die situative Kontextinformation beinhaltet also einen übergeordneten Zusammenhang, in dem eine bestimmte sprachliche Äußerung erfolgt. Eine solche Kontextinformation eignet sich besonders, um eine zu durchsuchende Datenmenge einzugrenzen, wodurch der Antwort-Datensatz effizienter ermittelt wird.

Alternativ wird in einer weiteren Ausführungsform der mindestens eine Komplementär-Datensatz unter Berücksichtigung einer Konzeptinformation erzeugt. Die Konzeptinformation ist ein Wissensinhalt, der einer Kategoriebildung oder einer sprachlichen Bezeichnung zugrunde liegt. Ein Erweitern des Anfrage-Datensatzes mit dieser Konzeptinformation wird auch als Konzeptualisierung bezeichnet. Ein Anfrage-Datensatz wird somit genauer definiert und der Anfrage-Datensatz von einem Computerprogramm besser verstanden. Folglich ermittelt das Computerprogramm einen passgenaueren Antwort-Datensatz.

In einer weiteren vorteilhaften Ausführungsform wird bei dem Ermitteln des Antwort-Datensatzes der mindestens eine Komplementär-Datensatz von einer Kontextinformations-Datenbank bereitgestellt. Die zum Ergänzen des Anfrage-Datensatzes benötigte Information beschreibt also eine Situation und liegt in einer Datenbank vor. Eine Datenbank ist grundsätzlich ein System zur elektronischen Datenverwaltung, welche benötigte Teildatenmengen bedarfsgerecht bereitstellt. Die Kontextinformations-Datenbank liefert auf Anfrage eine situative Kontextinformation und übergibt diese in dem Komplementär-Datensatz an das Computerprogramm. Mithilfe der Kontextinformations-Datenbank wird effizient auf eine Kontextinformation zugegriffen, um den Anfrage-Datensatz mit dieser Kontextinformation zu spezifizieren. Dies trägt dazu bei, dass der Antwort-Datensatz schneller und effektiver ermittelt wird.

Bevorzugt erfolgt das Eingeben des Anfrage-Datensatzes mittels Zeicheneingabe, wobei der mindestens eine Komplementär-Datensatz mindestens ein Zeichen enthält, und der Anfrage-Datensatzes mittels Zusammenstellen des Anfrage-Datensatzes und des Komplementär-Datensatzes zu einem Zeichenketten-Datensatz erweitert wird. Einfacher ausgedrückt, zwei Zeichenfolgen werden zu einer Zeichenkette verknüpft. Dabei sind die Zeichenfolgen vorzugsweise Texte. Mittels einer zeichen- und/oder textbasierten Datensatz-Form wird das Ermitteln eines Antwort-Datensatzes vereinfacht und vereinheitlicht.

Ferner bezieht sich der Anfrage-Datensatz bevorzugt auf mindestens einen zeitlich vorangegangenen Anfrage-Datensatz. Zwischen dem aktuellen Anfrage-Datensatz und mindestens einem Anfrage-Datensatz, welcher zu einem früheren Zeitpunkt eingegeben wurde, gibt es also einen gedanklichen bzw. logischen Zusammenhang. Derartige Bezüge ermöglichen eine Spezifizierung des Anfrage-Datensatzes mithilfe bisheriger Anfrage-Datensätze.

Bei dem Ermitteln des Antwort-Datensatzes ist es ferner vorteilhaft, den Anfrage-Datensatz in einem Speichermedium zwischenzuspeichern, um diesen Anfrage-Datensatz für ein späteres Erweitern des Anfrage-Datensatzes aufzubewahren. Somit bleibt der Anfrage-Datensatz erhalten und wird später mittels eines neuen Anfrage-Datensatzes ergänzt. Bevorzugt bleibt der Anfrage-Datensatz solange gespeichert, wie das Computerprogramm aktiv ist. Mithilfe des Zwischenspeicherns wird die Ermittlung des Antwort-Datensatzes effizienter, da auf eine bereits ermittelte Information erneut zugegriffen werden kann.

Gemäß der erfindungsgemäßen Lösung ist außerdem ein computerlesbares Speichermedium mit einem Computerprogramm mit Befehlen vorgesehen, die bei dem Ausführen des Computerprogramms einen Computer dazu veranlassen, die Schritte eines computerimplementierten Verfahrens nach mindestens einem der oben beschriebenen Ausführungsformen auszuführen. Das Speichermedium ist dafür vorgesehen, das Computerprogramm mit dem computerimplementierten Verfahren und mindestens einen Anfrage-Datensatz und mindestens einem zugewiesenem Antwort-Datensatz zu speichern. Somit werden das Computerprogramm, sowie der mindestens eine Anfrage-Datensatz und der mindestens eine Antwort-Datensatz sicher aufbewahrt.

Ebenfalls ist gemäß der Erfindung ein Datenverarbeitungssystem zum Ausführen eines computerimplementierten Verfahrens nach mindestens einem der beschriebenen Ausführungsformen vorgesehen, bei dem das Datenverarbeitungssystem eine Nutzerschnittstelle, einen Computer und ein Netzwerk aufweist, wobei der Computer ein Computerprogramm, ein Speichermedium, eine Kontextinformations-Datenbank und einen Suchalgorithmus umfasst. Das Datenverarbeitungssystem ist zum Organisieren von Daten vorgesehen, und bildet die Grundlage für die oben beschriebenen Ausführungsformen des computerimplementierten Verfahrens. Wie bereits oben erwähnt, enthält die Nutzerschnittstelle vorzugsweise eine Eingabe-Einrichtung und eine Ausgabe-Einrichtung. Der Computer ist zum Verarbeiten von EingabeDaten, vorzugsweise Anfrage-Datensätzen, in Ausgabe-Daten, vorzugsweise Antwort-Datensätzen, bereitgestellt. Enthaltene Komponenten, wie das Computerprogramm, das Speichermedium, Kontextinformations-Datenbank und Suchalgorithmus wurden ebenfalls bereits oben beschrieben. Das Netzwerk dient hier als Informationsquelle, wobei vorzugsweise das Internet als Netzwerk verwendet wird. Sämtliche für das computerimplementierte Verfahren aufgeführte Vorteile gelten somit auch für das erfindungsgemäße Datenverarbeitungssystem.

Ferner sind weitere Ausführungsformen möglich, die das computerimplementierte Verfahren und das Datenverarbeitungssystem noch effizienter machen.

So erfolgt das Ermitteln des Antwort-Datensatzes vorzugsweise mittels mindestens eines Suchalgorithmus. Ein Suchalgorithmus ist ein Algorithmus, der in einem Suchraum nach Mustern oder Objekten mit bestimmten Eigenschaften sucht. Ein Suchraum ist eine Menge, die nach zu findenden Objekten durchsucht werden soll. Der Suchalgorithmus stellt Techniken zur Verfügung, um einen besonders passgenauen Antwort-Datensatz zu ermitteln.

Lösungsgemäß wird der Computer vorzugsweise als Server genutzt. Ein Server stellt das Computerprogramm und Daten bereit, damit andere Computer oder Computerprogramme darauf zugreifen können, beispielsweise in einem Netzwerk. Mittels des Servers wird das Verfahren zur Datenabfrage einer sehr großen Nutzerzahl zugänglich gemacht.

In einer weiteren Ausführungsform erfolgt bei dem Ermitteln eines Antwort-Datensatzes für einen ersten Anfrage-Datensatz ein erstes Ausgeben eines ersten Antwort-Datensatzes und ein Prüfen, ob der erste Antwort-Datensatz eine endgültige Antwort oder eine Rückfrage beinhaltet. Bei einer endgültigen Antwort wird das Verfahren beendet und alle für das Verfahren auf einem Speichermedium gespeicherten Daten von dem Speichermedium gelöscht. Das Speichermedium ist hier vorzugsweise ein Arbeitsspeicher bzw. flüchtiger Speicher. Beinhaltet der Antwort-Datensatz jedoch eine Rückfrage, erfolgt ein Zwischenspeichern dieses ersten Anfrage-Datensatzes in dem Speichermedium. Wenn nun ein Eingeben eines zweiten Anfrage-Datensatzes erfolgt, wird dieser zunächst so behandelt, als beinhalte er eine neue Anfrage. Es erfolgt also das Ermitteln eines zweiten Antwort-Datensatzes. Wird dabei jedoch kein zweiter Antwort-Datensatz ermittelt, so erfolgt ein Erweitern des ersten Anfrage-Datensatzes um den zweiten Anfrage-Datensatz zu einem erweiterten Anfrage-Datensatz. Anschließend wird ein Antwort-Datensatz zu dem erweiterten Anfrage-Datensatz ermittelt. Der Schritt des Erweiterns eines Anfrage-Datensatzes durch einen vorangegangenen Datensatz erfolgt vorzugsweise so oft, bis ein Antwort-Datensatz mit einer endgültigen Antwort gefunden wurde, oder bis kein vorangegangener Anfrage-Datensatz mehr verfügbar ist. Diese Ausführungsform ermöglicht eine automatische Spezifizierung des Anfrage-Datensatzes mithilfe vorausgegangener Anfrage-Datensätze.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: ein Sequenzdiagramm eines ersten Ausführungsbeispiels eines erfindungsgemäßen computerimplementierten Verfahrens,
- Fig. 2: ein Sequenzdiagramm eines zweiten Ausführungsbeispiels eines erfindungsgemäßen computerimplementierten Verfahrens und
- Fig. 3: ein Blockdiagramm eines Ausführungsbeispiels eines erfindungsgemäßen Datenverarbeitungssystems.

### Detaillierte Beschreibung der Erfindung

Zum besseren Verständnis werden im Folgenden zweistellige Bezugszeichen zum Bezeichnen von Komponenten und dreistellige Bezugszeichen zum Bezeichnen von Verfahrensschritten verwendet.

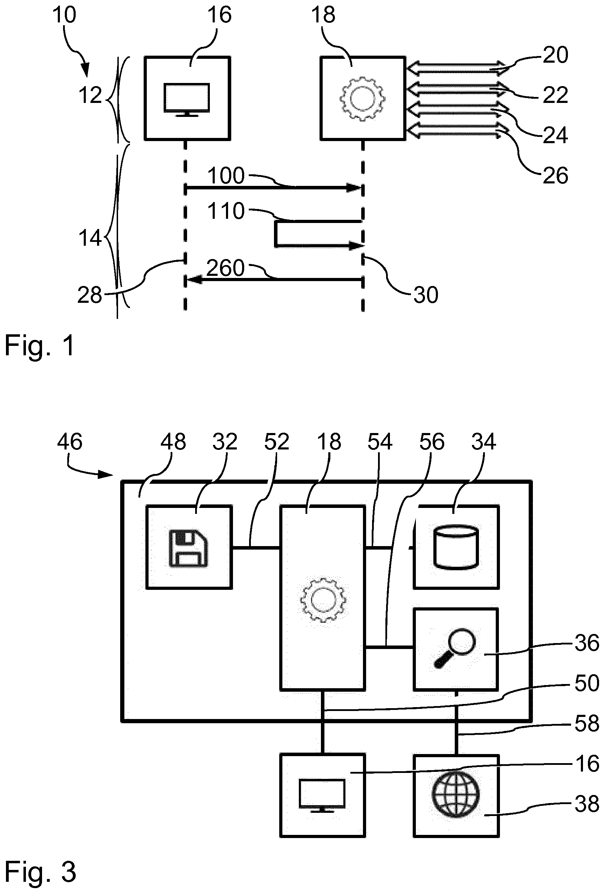

Fig. 1 zeigt ein computerimplementiertes Verfahren 10 in einem Sequenzdiagramm mit einem Kopfbereich 12 und einem Inhaltsbereich 14. Im Kopfbereich 12 sind zwei Kommunikationspartner bzw. Komponenten 16, 18 dargestellt. Diese sind eine Nutzerschnittstelle 16 und ein Computerprogramm 18. An dem Computerprogramm 18 sind verschiedene Datensätze 20, 22, 24, 26 abgebildet, dargestellt als Doppelpfeile bzw. Pfeile mit zwei Spitzen. Bei diesen Datensätzen 20, 22, 24, 26 handelt es sich um einen Anfrage-Datensatz 20, einen Antwort-Datensatz 22, einen Komplementär-Datensatz 24 und einen Rückfrage-Datensatz 26. Die von den Komponenten 16, 18 nach unten führenden gestrichelten Linien sind sogenannte Lebenslinien 28, 30 der jeweiligen Komponenten 16, 18. Zwischen der Lebenslinie 28 und der Lebenslinie 30 sind mehrere Pfeile abgebildet, welche zeitlich nacheinander erfolgende Interaktionen bzw. Verfahrensschritte 100, 110, 260 zwischen den Komponenten 16, 18 in der entsprechenden Reihenfolge darstellen. Diese Verfahrensschritte sind ein Eingeben 100 eines Anfrage-Datensatzes 20, ein Ermitteln 110 eines Antwort-Datensatzes 22 und ein Ausgeben 260 des Antwort-Datensatzes 22.

Die Nutzerschnittstelle 16 hat hier eine Tastatur und einen Bildschirm und wird von einem Nutzer als Schnittstelle zu dem Computerprogramm 18 verwendet. Die Datensätze 20, 22 dienen zum Übergeben von Informationen und Anweisungen zwischen dem Computerprogramm 18 und der Nutzerschnittstelle 16. Mittels der Tastatur erfolgt das Eingeben 100 des Anfrage-Datensatzes 20 mittels des Nutzers, wodurch der Anfrage-Datensatz 20 dem Computerprogramm 18 zu Verfügung steht. Mithilfe des Computerprogramms 18 erfolgt dann das Ermitteln 110 des Antwort-Datensatzes 22. Das Ausgeben 260 des Antwort-Datensatzes 22 erfolgt dann mithilfe des Bildschirms der Nutzerschnittstelle 16.

In einem weiteren, hier nicht dargestellten Ausführungsbeispiel erfolgen zusätzlich zur den Interaktionen zwischen dem Computerprogramm 18 und der Nutzerschnittstelle 16 auch Interaktionen zwischen dem Computerprogramm 18 und mindestens einer weiteren, hier nicht dargestellten, Komponente. Dabei werden neben dem Anfrage-Datensatz 20 und dem Antwort-Datensatz 22 auch der Komplementär-Datensatz 24 und der Rückfrage-Datensatz 26 übergeben.

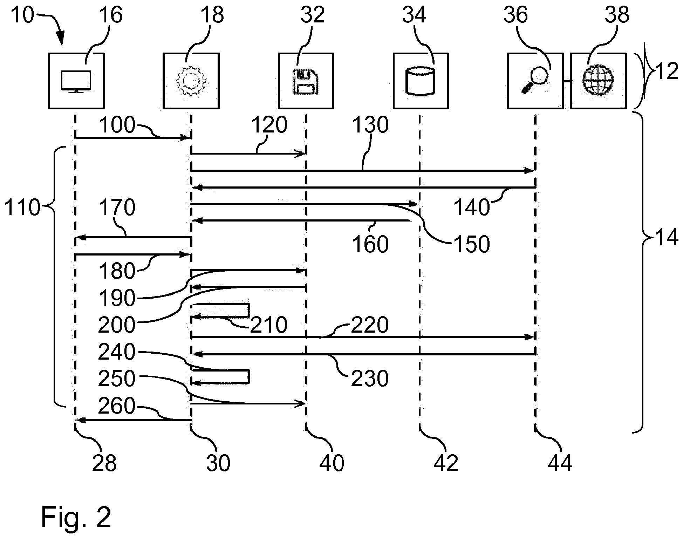

In Fig. 2 ist in ein Sequenzdiagramm für ein computerimplementiertes Verfahren 10 veranschaulicht, welches auf einem Ausführungsbeispiel gemäß Fig. 1 aufbaut. Auch für dieses Verfahren 10 werden mehrere Verfahrensschritte 100, 110, 260 bzw. Interaktionen zwischen verschiedenen Komponenten 16, 18, 32, 34, 36 dargestellt. Neben einer Nutzerschnittstelle 16 und einem Computerprogramm 18 wie in Fig. 1 werden in diesem Verfahren 10 ebenfalls ein Speichermedium 32, eine Kontextinformations-Datenbank 34 und ein Suchalgorithmus 36, der mit einem Netzwerk 38 verbunden ist, verwendet. Die genannten Komponenten 16, 18, 32, 34, 36, 38 sind in der aufgezählten Reihenfolge im Kopfbereich 12 des Sequenzdiagramms dargestellt. Ähnlich wie in Fig. 2 sind Lebenslinien 28, 30, 40, 42, 44 der Komponenten 16, 18, 32, 34, 36 im Inhaltsbereich 14 des Sequenzdiagramms als nach unten führende, gestrichelten Linien abgebildet. Zwischen diesen Lebenslinien 28, 30, 40, 42, 44 stellen wieder Pfeile die Interaktionen bzw. Verfahrensschritte 100, 110, 260 in ihrer zeitlichen Reihenfolge dar, wobei der Verfahrensschritt 110 hier in mehrere Teilschritte untergliedert ist. Die nur in Fig. 1 dargestellten Datensätze 20, 22, 24, 28 werden in der Beschreibung zu Fig. 2 ebenfalls verwendet und sind auch hier ein Anfrage-Datensatz 20, ein Antwort-Datensatz 22, ein Komplementär-Datensatz 24 und ein Rückfrage-Datensatz 26.

Die Verfahrensschritte 100, 110, 260 sind wie in Fig. 1 ein Eingeben 100 des Anfrage-Datensatzes 20 mittels der Nutzerschnittstelle 16, ein Ermitteln 110 des Antwort-Datensatzes 22 mittels des Computerprogramms 18 und ein Ausgeben 260 des Antwort-Datensatzes 22 mittels der Nutzerschnittstelle 16. Die Teilschritte für das Ermitteln 110 des Antwort-Datensatzes 22 sind im Folgenden aufgeführt:
In Teilschritt 120 wird der Anfrage-Datensatz 20 mithilfe des Computerprogramms 18 auf dem Speichermedium 32 gespeichert, um dort zum späteren Verwenden verfügbar zu sein. In Teilschritt 130 wird der Anfrage-Datensatz 20 von dem Computerprogramm 18 an den Suchalgorithmus 36 weitergeleitet, damit der Suchalgorithmus 36 in dem Netzwerk 38 mindestens eine zu dem Anfrage-Datensatz 20 passende Information sucht. Als Netzwerk 38 wird hier das Internet verwendet, und das Suchen nach der passenden Information verläuft hier ohne Ergebnis. In Teilschritt 140 erfolgt ein Rückmelden von dem Suchalgorithmus 36 an das Computerprogramm 18, dass keine Information zu dem Anfrage-Datensatz 20 verfügbar ist.

In Teilschritt 150 wird der Anfrage-Datensatz 20 von dem Computerprogramm 18 an die Kontextinformations-Datenbank 34 weitergeleitet, um in der Datenbank 34 eine situative Kontextinformation zu dem Anfrage-Datensatz 20 abzufragen. Dieses Abfragen erfolgt hier ohne Ergebnis. In Teilschritt 160 erfolgt ein Rückmelden von der Kontextinformations-Datenbank 34 an das Computerprogramm 18, dass keine situative Kontextinformation verfügbar ist.

In Teilschritt 170 wird ein Rückfrage-Datensatz 26 von dem Computerprogramm 18 mittels der Nutzerschnittstelle 16 ausgegeben. Dieser Datensatz 22 ist eine Rückfrage bzw. Gegenfrage, für die eine Antwort mittels Eingeben des Komplementär-Datensatzes 24 erwartet wird. In Teilschritt 180 wird der Komplementär-Datensatz 24 von einem Nutzer mittels der Nutzerschnittstelle 16 eingegeben und steht somit dem Computerprogramm 18 zur Verfügung.

In Teilschritt 190 erfolgt ein Abrufen 190 des Anfrage-Datensatzes 20 mithilfe des Computerprogramms 18 von dem Speichermedium 32. In Teilschritt 200 wird der Anfrage-Datensatzes 20 von dem Speichermedium 32 an das Computerprogramm 18 übergeben. In Teilschritt 210 wird der Anfrage-Datensatzes 20 mithilfe des Computerprogramms 18 um den Komplementär-Datensatz 24 erweitert. Es entsteht ein erweiterter Anfrage-Datensatz 20. In Teilschritt 220 wird der erweiterte Anfrage-Datensatz 20 von dem Computerprogramm 18 an den Suchalgorithmus 36 weitergeleitet, damit der Suchalgorithmus 36 im Internet 38 mindestens eine Information für einen Antwort-Datensatz 22 sucht, die zu dem erweiterten Anfrage-Datensatz 20 passt. Das Suchen führt hier zum Auffinden eines passenden Antwort-Datensatzes 22. In Teilschritt 230 wird der Antwort-Datensatzes 22 von dem Suchalgorithmus 36 an das Computerprogramm 18 übergeben.

In Teilschritt 240 wird mithilfe des Computerprogramms 18 festgestellt, dass der Antwort-Datensatz 22 eine verwendbare Information beinhaltet, das heißt, dass die Information mit einer einem festgelegtem Konfidenzniveau entsprechenden Wahrscheinlichkeit eine richtige bzw. passgenaue Information zu dem Anfrage-Datensatz 20 ist. Der Antwort-Datensatz 22 steht somit zum Ausgeben 260 mittels der Nutzerschnittstelle 16 bereit. In Teilschritt 250 wird der Anfrage-Datensatzes 20 noch mithilfe des Computerprogramms 18 von dem Speichermedium 32 gelöscht.

In der Fig.3 ist ein Datenverarbeitungssystem 46 dargestellt, mit Komponenten 16, 18, 32, 34, 36, 38 wie in Fig. 2 und weiteren Komponenten 48, 50, 52, 54, 56, 58. Ein Computer 48 ist mit einem Rahmen dargestellt, welcher die im Computer enthaltenen Komponenten 18, 32, 34, 36 umschließt. Diese sind ein Computerprogramm 18, ein Speichermedium 32, eine Kontextinformations-Datenbank 34 und ein Suchalgorithmus 36. Eine Nutzerschnittstelle 16 und ein Netzwerk 38 sind Komponenten außerhalb des Rahmens bzw. des Computer 48. Die Komponenten 16, 18, 32, 34, 36, 38 sind untereinander via Kommunikationsverbindungen 50, 52, 54, 56, 58 verbunden und für eine bidirektionale Kommunikation miteinander eingerichtet. Die nur in Fig. 1 dargestellten Datensätze 20, 22, 24, 26 werden auch in dieser Beschreibung zu Fig. 3 verwendet und sind auch hier ein Anfrage-Datensatz 20, eine Antwort-Datensatz 22, ein Komplementär-Datensatz 24 und ein Rückfrage-Datensatz 26.

Das Computerprogramm 18 ist zum direkten Kommunizieren mit den Komponenten 16, 32, 34, 36 eingerichtet. Von diesen Komponenten 16, 32, 34, 36 eingehende Datensätze 20, 22, 24, 26 sind zum Verarbeiten mittels des Computerprogramms 18 oder zum Weiterleiten an eine andere der Komponenten 16, 32, 34, 36 vorgesehen. Von dem Computerprogramm 18 verarbeitete Datensätze 20, 22, 24, 26 sind zum Weitergeben an mindestens eine der Komponenten 16, 32, 34, 36 vorgesehen. Verschiedene Funktionalitäten der Komponenten 16, 18, 32, 34, 36, 38, insbesondere deren Kommunikation untereinander, sind im Folgenden beschrieben.

Die Nutzerschnittstelle 16 kommuniziert mit dem Computerprogramm 18 mittels einer Kommunikationsverbindung 50. Dabei wird der Anfrage-Datensatz 20 von der Nutzerschnittstelle 16 an das Computerprogramm 18 übertragen, um von dem Computerprogramm 18 verarbeitet zu werden, oder ein Antwort-Datensatz 22 wird von dem Computerprogramm 18 an die Nutzerschnittstelle 16 übertragen, um von der Nutzerschnittstelle 16 ausgegeben zu werden. Die Nutzerschnittstelle 16 hat hier eine Tastatur zum Eingeben des Anfrage-Datensatzes 20 und einen Bildschirm zum Ausgeben des Antwort-Datensatzes 22.

Das Speichermedium 32 kommuniziert mit dem Computerprogramm 18 mittels einer Kommunikationsverbindung 52. Dabei wird ein Datensatz 20, 22, 24, 26 von dem Computerprogramm 18 an das Speichermedium 32 übergeben, um von dem Speichermedium 32 gespeichert zu werden, oder ein Datensatz 20, 22, 24, 26 wird von dem Speichermedium 32 an das Computerprogramm 18 übergeben, um von dem Computerprogramm 18 verarbeitet oder weitergeleitet zu werden.

Die Kontextinformations-Datenbank 34 kommuniziert mit dem Computerprogramm 18 mittels einer Kommunikationsverbindung 54. Dabei wird der Anfrage-Datensatz 20 von dem Computerprogramm 18 an die Kontextinformations-Datenbank 34 übergeben, um von der Datenbank 34 gespeichert oder zum internen Abfragen einer Information verwendet zu werden. Umgekehrt wird ein Komplementär-Datensatz 24 von der Datenbank 34 an das Computerprogramm 18 übergeben, um von dem Computerprogramm 18 verarbeitet oder weitergeleitet zu werden. Die Kontextinformations-Datenbank 34 beinhaltet eine Vielzahl von situativen Kontextinformationen zu verschiedenen Anfrage-Datensätzen 20.

Der Suchalgorithmus 36 kommuniziert mit dem Computerprogramm 18 mittels einer Kommunikationsverbindung 56. Dabei wird ein Anfrage-Datensatz 20 von dem Computerprogramm 18 an den Suchalgorithmus 36 übergeben, um von dem Suchalgorithmus 36 zum Ermitteln bzw. Auffinden einer Information verwendet zu werden. Umgekehrt wird ein Antwort-Datensatz 22 von dem Suchalgorithmus 36 an das Computerprogramm 18 übergeben, um von dem Computerprogramm 18 verarbeitet oder weitergeleitet zu werden. Der Suchalgorithmus 36 sucht hier in dem Netzwerk 38 nach Informationen bzw. passenden Antwort-Datensätzen 22 zu Anfrage-Datensätzen 20 des Computerprogramms 18. Mit dem Netzwerk 38 ist hier das Internet gemeint. Bei dem Suchalgorithmus 36 handelt es sich hier um den Suchalgorithmus FLAN, einen Algorithmus zur Ähnlichkeitssuche. Der Suchalgorithmus 36 kommuniziert mit dem Internet 38 mittels einer Kommunikationsverbindung 58.

### Bezugszeichenliste

- 10: Computerimplementiertes Verfahren
- 12: Kopfbereich
- 14: Inhaltsbereich
- 16: Nutzerschnittstelle
- 18: Computerprogramm
- 20: Anfrage-Datensatz
- 22: Antwort-Datensatz
- 24: Komplementär-Datensatz
- 26: Rückfrage-Datensatz
- 28: Lebenslinie
- 30: Lebenslinie
- 32: Speichermedium
- 34: Kontextinformations-Datenbank
- 36: Suchalgorithmus
- 38: Netzwerk
- 40: Lebenslinie
- 42: Lebenslinie
- 44: Lebenslinie
- 46: Datenverarbeitungssystem
- 48: Computer
- 50: Kommunikationsverbindung
- 52: Kommunikationsverbindung
- 54: Kommunikationsverbindung
- 56: Kommunikationsverbindung
- 58: Kommunikationsverbindung
- 100: Eingeben eines Anfrage-Datensatzes
- 110: Ermitteln eines Antwort-Datensatzes
- 120: Speichern des Anfrage-Datensatzes
- 130: Weiterleiten des Anfrage-Datensatzes
- 140: Rückmelden, dass keine Information zu Anfrage-Datensatz verfügbar ist
- 150: Weiterleiten des Anfrage-Datensatzes
- 160: Rückmelden, dass keine situative Kontextinformation verfügbar ist
- 170: Ausgeben eines Rückfrage-Datensatzes
- 180: Eingeben eines Komplementär-Datensatzes
- 190: Abrufen des Anfrage-Datensatzes
- 200: Übergeben des Anfrage-Datensatzes
- 210: Erweitern des Anfrage-Datensatzes um Komplementär-Datensatz
- 220: Weiterleiten des erweiterten Anfrage-Datensatzes
- 230: Übergeben eines Antwort-Datensatzes
- 240: Feststellen, dass Antwort-Datensatz richtige Information beinhaltet
- 250: Löschen des Anfrage-Datensatzes
- 260: Ausgeben des Antwort-Datensatzes

## Patentansprüche

1. Computerimplementiertes Verfahren (10) zum Beschaffen von Informationen mit den Verfahrensschritten:
- Eingeben (100) eines Anfrage-Datensatzes (20),
- Ermitteln (110) eines Antwort-Datensatzes (22) zu dem Anfrage-Datensatz (20) und
- Ausgeben (260) des Antwort-Datensatzes (22),
**dadurch gekennzeichnet, dass** bei dem Ermitteln (110) des Antwort-Datensatzes (22) ein Erweitern (210) des Anfrage-Datensatzes (20) um mindestens einen Komplementär-Datensatz (24) erfolgt.

2. Computerimplementiertes Verfahren (10) nach Anspruch 1,
**dadurch gekennzeichnet, dass** bei dem Ermitteln (110) des Antwort-Datensatzes (22) ein Ausgeben (170) eines Rückfrage-Datensatzes (26) erfolgt.

3. Computerimplementiertes Verfahren (10) nach Anspruch 1 oder 2,
**dadurch gekennzeichnet, dass** bei dem Ermitteln (110) des Antwort-Datensatzes (22) ein Eingeben (180) des mindestens einen Komplementär-Datensatzes (24) erfolgt.

4. Computerimplementiertes Verfahren (10) nach einem der vorhergehenden Ansprüche,
**dadurch gekennzeichnet, dass** bei dem Ermitteln (110) des Antwort-Datensatzes (22) ein Erzeugen des mindestens einen Komplementär-Datensatzes (24) unter Berücksichtigung einer situativen Kontextinformation erfolgt.

5. Computerimplementiertes Verfahren (10) nach einem der vorhergehenden Ansprüche,
**dadurch gekennzeichnet, dass** bei dem Ermitteln (110) des Antwort-Datensatzes (22) ein Bereitstellen des mindestens einen Komplementär-Datensatzes (24) von einer Kontextinformations-Datenbank (34) erfolgt.

6. Computerimplementiertes Verfahren (10) nach einem der vorhergehenden Ansprüche,
**dadurch gekennzeichnet, dass** das Eingeben (100) des Antwort-Datensatzes (22) mittels Zeicheneingabe erfolgt, wobei der mindestens eine Komplementär-Datensatz (24) mindestens ein Zeichen beinhaltet, und das Erweitern (210) des Anfrage-Datensatzes (20) mittels Zusammenstellen des Anfrage-Datensatzes (20) und des Komplementär-Datensatzes (24) zu einem Zeichenketten-Datensatz erfolgt.

7. Computerimplementiertes Verfahren (10) nach einem der vorhergehenden Ansprüche,
**dadurch gekennzeichnet, dass** sich der Anfrage-Datensatz (20) auf mindestens einen zeitlich vorangegangenen Anfrage-Datensatz (20) bezieht.

8. Computerimplementiertes Verfahren (10) nach einem der vorhergehenden Ansprüche,
**dadurch gekennzeichnet, dass** bei dem Ermitteln (110) des Antwort-Datensatzes (22) ein Zwischenspeichern (120) des Anfrage-Datensatzes (20) in einem Speichermedium (32) erfolgt, um diesen Anfrage-Datensatz (20) für ein späteres Erweitern (210) des Anfrage-Datensatzes (20) aufzubewahren.

9. Computerlesbares Speichermedium (32) mit einem Computerprogramm (18) mit Befehlen, die bei dem Ausführen des Computerprogramms (18) einen Computer (48) dazu veranlassen, die Schritte eines computerimplementierten Verfahrens (10) nach einem der Ansprüche 1 bis 8 auszuführen.

10. Datenverarbeitungssystem (46) zum Ausführen eines computerimplementierten Verfahrens (10) nach einem der Ansprüche 1 bis 8, bei dem das Datenverarbeitungssystem (46) eine Nutzerschnittstelle (16), einen Computer (48) und ein Netzwerk (38) aufweist, wobei der Computer (48) ein Computerprogramm (18), ein Speichermedium (32), eine Kontextinformations-Datenbank (34) und einen Suchalgorithmus (36) umfasst.
